# EUROPÄISCHE PATENTSCHRIFT

(11) **EP 2 404 088 B1**
(45) Veröffentlichungstag und Bekanntmachung des Hinweises auf die Patenterteilung: **03.07.2013**
(21) Anmeldenummer: 10709449.2
(22) Anmeldetag: 23.02.2010
(51) Int. Cl.: F16J 15/44, F01D 11/00, F01D 11/02

(54) **LABYRINTHDICHTUNGSBUCHSE FÜR EINE STRÖMUNGSMASCHINE UND VERFAHREN ZUR MONTAGE EINER LABYRINTHDICHTUNG MIT DER LABYRINTHDICHTUNGSBUCHSE**
LABYRINTH SEAL SOCKET FOR A TURBO MACHINE AND METHOD FOR FITTING A LABYRINTH SEAL WITH THE SOCKET
DOUILLE POUR JOINT LABYRINTHE POUR UNE TURBOMACHINE ET PROCÉDÉ DE MONTAGE D'UN JOINT LABYRINTHE À L'AIDE DE LA DOUILLE D'ÉTANCHÉITÉ À LABYRINTHE

(30) Priorität: 06.03.2009 EP 09003322
(43) Veröffentlichungstag der Anmeldung: 11.01.2012
(73) Patentinhaber: Siemens Aktiengesellschaft, 80333 München (DE)
(72) Erfinder: PIEPER, Norbert, 47178 Duisburg (DE); SIEVERT, Roland, 40885 Ratingen (DE)
(86) Internationale Anmeldenummer: PCT/EP2010/052238
(87) Internationale Veröffentlichungsnummer: WO 2010/100053

(56) Entgegenhaltungen:
- EP-A- 1 243 755
- US-A- 5 487 549
- US-A1- 2006 120 861

## Beschreibung

Die Erfindung betrifft eine Labyrinthdichtungsbuchse für eine Strömungsmaschine, die Strömungsmaschine mit der Labyrinthdichtungsbuchse und ein Verfahren zur Montage einer Labyrinthdichtung, die die Labyrinthdichtungsbuchse aufweist.

Eine Strömungsmaschine, beispielsweise eine Dampfturbine, weist ein Gehäuse und einen Läufer auf, der in dem Gehäuse drehbar gelagert ist. Beim Betrieb der Dampfturbine tritt in das Gehäuse Dampf ein, dessen Enthalpie an einer Beschaufelung des Läufers abgebaut wird, so dass der Läufer drehangetrieben wird. Der Läufer weist eine Welle auf, die an ihren Längsenden mit jeweils einem Lager gelagert ist, das außerhalb des Gehäuses vorgesehen ist. Da die Welle beim Betrieb der Dampfturbine relativ zu dem Gehäuse sich bewegt, ist ein Spalt zwischen der Welle und dem Gehäuse vorgesehen, so dass die Welle an das Gehäuse nicht anstreifen kann. Durch den Spalt stellt sich aufgrund des Überdrucks des Dampfs innerhalb des Gehäuses eine Leckageströmung ein. Es wird angestrebt diesen Spalt möglichst effektiv abzudichten, so dass die Leckage möglichst gering ist.

Herkömmlich ist in dem Spalt zur Reduktion der Leckage beispielsweise eine berührungsfreie Dichtung vorgesehen. Im stationären Betrieb der Dampfturbine ist die Weite des Spalts über die Zeit im Wesentlichen konstant. Erstrebenswert ist es, dass die Dichtung eine möglichst starke Abdichtwirkung hat, damit der Wirkungsgrad der Dampfturbine hoch ist. Allerdings kann sich bei instationären Betriebszuständen der Dampfturbine die Weite des Spalts verändern, wobei ein Anstreifen der Dichtung unterbunden sein soll. Dem entgegenzuwirken kann die Dichtung radial verstellbar eingerichtet sein, so dass eine Labyrinthdichtung sowohl für stationäre als auch für instationäre Betriebszustände gleichermaßen gut geeignet ist. Es ist bekannt federnde Labyrinthdichtsegmente in Nuten zu lagern, die in dem Gehäuse eingebracht sind, wobei die Oberfläche der Welle, an der die Labyrinthdichtsegmente abdichten, glatt ausgebildet ist. Um die Labyrinthdichtung ohne eine Teilfuge konstruktiv realisieren zu können, ist es bekannt, die Labyrinthdichtung in ein separates Wellendichtungsgehäuse einzubauen. Herkömmlich sind diese Labyrinthdichtungen als eine Durchblickdichtung oder eine Spitze-Spitze-Dichtung ausgeführt, die ein großes radiales Spiel haben, damit das Wellendichtungsgehäuse mit der darin eingebauten Labyrinthdichtung durch Aufschieben auf die Welle montierbar ist. Jedoch hat die Durchblickdichtung und die Spitze-Spitze-Dichtungen aufgrund des großen Radialspiels eine schlechte Dichtwirkung, wodurch der Wirkungsgrad der Dampfturbine beeinträchtigt ist.

Labyrinthdichtungen sind beispielsweise in den Dokumenten EP 1 243 755 und US 5,487,549 beschrieben.

Aufgabe der Erfindung ist es eine Labyrinthdichtungsbuchse für eine Strömungsmaschine, eine Strömungsmaschine mit der Labyrinthdichtungsbuchse und ein Verfahren zur Montage einer Labyrinthdichtung mit der Labyrinthdichtungsbuchse zu schaffen, wobei die Strömungsmaschine mit der Labyrinthdichtungsbuchse einen hohen Wirkungsgrad hat.

Die erfindungsgemäße Labyrinthdichtungsbuchse für eine Strömungsmaschine weist einen Labyrinthdichtungsträgerring, der an seiner Innenseite einen umlaufenden, radial nach innen sich erstreckenden Flansch aufweist, und einen Labyrinthdichtungsring auf, der über den Umfang aus mindestens einem Segment zusammengesetzt ist, wobei das Segment des Labyrinthdichtungsrings seitlich an dem Flansch radial verschiebbar anliegt, wodurch das Segment in eine Betriebsstellung und in eine Montagestellung bringbar ist, in der das Segment bezogen auf die Betriebsstellung radial nach außen versetzt ist, und an dem Labyrinthdichtungsträgerring mit einem Vorspannmittel radial nach innen vorgespannt abgestützt ist, wobei der Flansch ein in Axialrichtung sich erstreckendes Durchgangsloch und der Labyrinthdichtungsring ein Steckloch aufweisen, das in der Montagestellung mit dem Durchgangsloch fluchtend und in der Betriebsstellung bezogen auf das Durchgangsloch radial nach innen versetzt angeordnet ist, so dass mittels eines Bolzens, der in das Durchgangsloch und das Steckloch gesteckt ist, das Segment in der Montagestellung gehalten ist und, wenn der Bolzen aus dem Steckloch entfernt ist, das Segment von dem Vorspannmittel in die Betriebsstellung gedrückt ist. Bevorzugtermaßen sind das Durchgangsloch und das Steckloch in der Betriebsstellung derart zueinander versetzt angeordnet sind, so dass das Durchgangsloch und das Steckloch sich nicht überlappen, wobei an dem Steckloch eine Aussparung zum Führen des Bolzens in das Steckloch vorgesehen ist.

Die erfindungsgemäße Strömungsmaschine mit einem Gehäuse weist die Labyrinthdichtungsbuchse und eine Welle mit einer Dichtungsfläche auf, die zusammen mit der Labyrinthdichtungsbuchse eine Labyrinthdichtung bildet, wobei die Labyrinthdichtungsbuchse radial nach innen sich erstreckende und umlaufende Dichtspitzen aufweist, die den radial nach außen sich erstreckenden und umlaufenden Dichtspitzen der Dichtungsfläche zugewandt angeordnet sind, wobei die Dichtspitzen der Labyrinthdichtungsbuchse mit denen der Dichtungsfläche in der Montagestellung außer Eingriff stehen und in der Betriebsstellung in Eingriff stehen.

Das erfindungsgemäße Verfahren zur Montage der Labyrinthdichtung der Strömungsmaschine weist die Schritte auf: Bereitstellen der Labyrinthdichtungsbuchse und der Welle mit der Dichtungsfläche; Einschieben des Bolzens in das Durchgangsloch des Flansches und des Stecklochs des Labyrinthdichtungsrings, wodurch der Labyrinthdichtungsring in die Montagestellung gebracht wird; Überschieben der Labyrinthdichtungsbuchse über die Dichtungsfläche, wobei die Dichtspitzen des Labyrinthdichtungsrings und der Dichtungsfläche außer Eingriff stehen; Herausziehen des Bolzens aus dem Durchgangsloch des Flansches und dem Steckloch des Labyrinthdichtungsrings, wodurch der Labyrinthdichtungsring von dem Vorspannmittel in die Betriebsstellung gebracht wird, so dass der Labyrinthdichtungsring und die Dichtungsfläche die Labyrinthdichtung bilden.

Um die Labyrinthdichtung in dem Labyrinthdichtungsträgerring ohne eine Teilfuge im Gehäuse realisieren zu können, werden zur Montage der Labyrinthdichtungsbuchse die Dichtspitzen der Segmente in der Labyrinthdichtungsbuchse radial nach außen verschoben, um ein Auffädeln auf die Dichtungsfläche zu ermöglichen. Nach der Montage werden die Segmente wieder radial nach innen verschoben, damit die Labyrinthdichtung eine hohe Dichtwirkung hat. Dadurch hat die Labyrinthdichtung eine geringe Leckagerate, wodurch der Wirkungsgrad der Strömungsmaschine hoch ist. Die radiale Bewegung des Segments wird konstruktiv derart ermöglicht, dass der Bolzen in Axialrichtung des Segments in das Durchgangsloch und das Steckloch gesteckt wird. Zur Montage werden die Segmente dann durch Hebelkraft nach außen geschoben. Nach erfolgter Montage wird der Bolzen wieder entfernt, wonach die Segmente durch das Vorspannmittel zu der radial einwärts gerichteten Rückstellung gebracht werden, um die Betriebsposition des Segments herzustellen.

Der Labyrinthdichtungsträgerring weist bevorzugt an seiner Innenseite einen umlaufenden, radial nach innen sich erstreckenden, anderen Flansch auf, der mit dem einen Flansch eine Nut ausbildet, in die der Labyrinthdichtungsring eingesetzt ist. Die Flansche weisen bevorzugt einander zugewandte Vorsprünge auf, so dass die Nut als eine T-Nut ausgebildet ist, und das Segment weist bevorzugt einen radial außen liegenden und in Umfangsrichtung verlaufenden Hammerkopf auf, der in die T-Nut formschlüssig eingreift. Von der T-Nut ist bevorzugt ein Radialspiel des Hammerkopfs derart definiert, dass der Hammerkopf an dem Grund der T-Nut radial nach außen abgestützt ist, wenn das Segment in der Montagestellung ist, und an den Vorsprüngen radial nach innen abgestützt ist, wenn das Segment in der Betriebsstellung ist.

Bevorzugtermaßen ist das Vorspannmittel eine Schraubenfeder. In den Segmenten ist bevorzugt in Umfangsrichtung sich erstreckend ein torusartiger Kanal vorgesehen, in dem die Schraubenfeder eingesetzt ist und in Umfangsrichtung gespannt ist, so dass mittels der Schraubenfeder das Segment in Radialrichtung nach innen vorgespannt ist. Als Alternative ist es bevorzugt, dass in den Segmenten jeweils mindestens ein radial nach außen offenes Sackloch vorgesehen ist, in das die Schraubenfeder eingesetzt ist und in Radialrichtung gespannt ist, so dass mittels der Schraubenfeder das Segment in Radialrichtung nach innen vorgespannt ist. Ferner ist es bevorzugt, dass der Labyrinthdichtungsträgerring an seiner Innenseite eine Mehrzahl von den Flanschen aufweist, die axial hintereinander liegend angeordnet sind und an denen jeweils einer der Labyrinthdichtungsringe vorgesehen ist, wobei die Durchgangslöcher der Flansche miteinander fluchtend angeordnet sind und die Stecklöcher in den Labyrinthdichtungsringen als Durchstecklöcher ausgebildet sind, so dass der Bolzen axial durch die hintereinander liegenden Durchgangslöcher der Flansche und die dazugehörigen Stecklöcher der Labyrinthdichtungsringe steckbar ist.

Das Durchgangsloch des Flanschs ist bevorzugt mit einem lösbaren Stopfen zum Verschließen des Durchgangslochs versehen. Dadurch ist es vorteilhaft unterbunden, dass während des Betriebs der Strömungsmaschine durch die Durchgangslöcher und der Stecklöcher eine Leckageströmung sich einstellen kann. Beispielsweise ist die Strömungsmaschine eine Dampfturbine. Das von der T-Nut definierte Radialspiel ist entsprechend bei der Konstruktion der Stopfbuchse der Dampfturbine vorzusehen.

Mit der erfindungsgemäßen Labyrinthdichtungsbuchse ist eine manuell durch das Einschieben des Bolzens hervorgerufene, radiale Bewegung der Segmente konstruktiv vorgesehen. Dadurch können über 360° geschlossene Labyrinthdichtungen auf die Welle montiert werden. Hieraus ergibt sich vorteilhaft eine verringerte Leckage über die Stopfbuchse, was zu einem verbesserten Gesamtwirkungsgrad führt. Außerdem können das Gehäuse der Strömungsmaschine oder Bestandteile davon als ein integrales Bauteil ohne eine Teilfuge ausgeführt werden, wobei dennoch die Labyrinthdichtung eine gute Dichtwirkung hat. Beispielsweise bei der Dampfturbine können im unbeschaufelten Bereich eines Innengehäuses oder eines Leitschaufelträgers integrale Ringe eingesetzt werden, die nach dem Aufschieben auf die Welle mit dem restlichen Innengehäuse verschraubt werden können. Dadurch, dass bei der Konstruktion des Gehäuses die Teilfuge verzichtbar ist, können kostengünstige Materialien zum Einsatz kommen und das Gehäuse kann insgesamt als gewichtsparend ausgeführt werden.

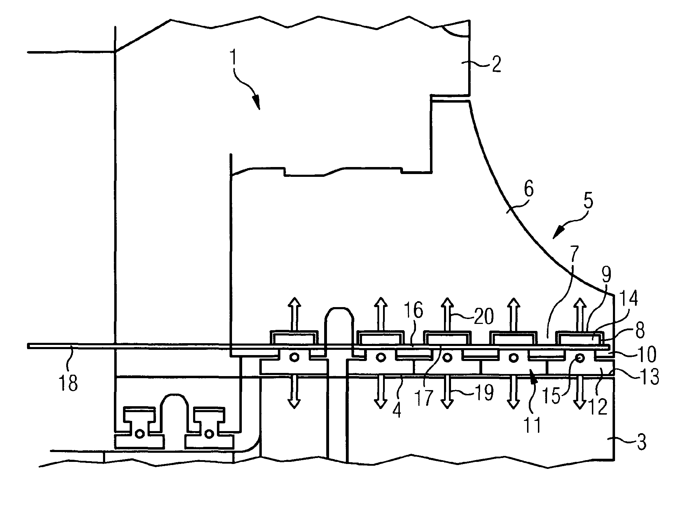

Im Folgenden wird eine bevorzugte Ausführungsform einer erfindungsgemäßen Strömungsmaschine mit einer erfindungsgemäßen Labyrinthdichtungsbuchse anhand der beigefügten schematischen Zeichnung erläutert. Fig. 1 zeigt einen Längsschnitt eines Längsendbereichs der erfindungsgemäßen Ausführungsform der Strömungsmaschine.

Wie es aus Fig. 1 ersichtlich ist, weist eine Strömungsmaschine 1 ein Gehäuse 2 und eine Welle 3 auf. Auf dem Längsendbereich der Welle 3 ist eine Dichtungsfläche 4 ausgebildet. Die Dichtungsfläche 4 umgreifend ist in dem Gehäuse 2 eine Labyrinthdichtungsbuchse 5 angebracht, wobei von der Dichtungsfläche 4 und der Labyrinthdichtungsbuchse 5 eine Labyrinthdichtung gebildet ist. Die Labyrinthdichtungsbuchse 5 weist einen Labyrinthdichtungsträgerring 6 auf, der in eine entsprechende Ausnehmung des Gehäuses 2 eingesetzt ist. Der Labyrinthdichtungsträgerring 6 umgreift die Dichtungsfläche 4 und hat in etwa die gleiche axiale Erstreckung wie die Dichtungsfläche 4. An der Innenseite des Labyrinthdichtungsträgerrings 6 sind fünf, axial nebeneinander liegende, umlaufende T-Nuten 8 ausgebildet, in die jeweils ein Labyrinthdichtungsring 11 eingesetzt ist. Jeder Labyrinthdichtungsring 11 weist an seinem radial außenseitigen Umfang einen Flansch 7 auf, der in seinem Querschnitt als ein Hammerkopf 14 ausgebildet ist. Der Hammerkopf 14 greift in seine ihm zugeordnete T-Nut 8 ein, so dass in Radialrichtung sowohl nach innen als auch nach außen der Labyrinthdichtungsring 11 in den Labyrinthdichtungsträgerring 6 festgelegt ist. Über den Umfang verteilt ist jeder Labyrinthdichtungsring 11 in mehrere Segmente 12 aufgeteilt.

Die T-Nut 8 weist ein Paar Vorsprünge 10 auf, die mit entsprechenden Einbuchtungen im Hammerkopf 14 korrespondieren. Ferner ist die T-Nut 8 radial nach außen durch ihren Nutgrund 9 begrenzt. Durch die Position des Nutgrunds 9 ist die maximale Radiallage des Segments 12 definiert. Hingegen ist die minimale Radiallage des Segments 12 durch die radial außen liegenden Flanken der Vorsprünge 10 und der radial innen liegenden Flanken der Einbuchtungen des Hammerkopfs 14 definiert. Dadurch ergibt sich für jedes Segment 12 ein maximal mögliches Radialspiel, im Rahmen dessen das Segment 12 in der T-Nut 8 beweglich ist. An der radial innen liegenden Seite weist jedes Segment 12 eine Mehrzahl an Dichtspitzen 13 auf, die mit der Dichtungsfläche 4 unter Ausbilden der Labyrinthdichtung zusammenwirken. Das Radialspiel ist derart definiert, dass, wenn die Segmente 12 radial innen liegend angeordnet sind, die Segmente 12 in ihrer Betriebsstellung sind. Sind die Segmente 12 radial außen liegend angeordnet, so befinden sie sich in ihrer Montagestellung, wodurch die Dichtspitzen 13 von der Dichtungsfläche 4 außer Eingriff stehen. Dadurch kann die Labyrinthdichtungsbuchse 5 über die Dichtungsfläche 4 geschoben werden, ohne dass die Dichtspitzen 13 sich verkanten oder Schaden nehmen.

In den Labyrinthdichtungsringen 11 ist über den Umfang laufend jeweils eine Schraubenfeder 15 vorgesehen, die die Segmente 12 radial nach innen mit einer Vorspannkraft beaufschlagen, die radial nach innen wirkt. Ferner weisen die Flansche 7 Stecklöcher 17 und der Labyrinthdichtungsträgerring 6 in den Flaschen 7 der T-Nuten 8 Durchgangslöcher 16 auf. Für die Segmente 12, die axial nebeneinander liegend angeordnet sind, sind die Durchgangslöcher 16 und die Stecklöcher 17 axial nebeneinander liegend angeordnet, wobei die Durchgangslöcher 16 und die Stecklöcher 17 miteinander in Axialrichtung fluchten. Hervorgerufen durch die Vorspannkraft der Schraubenfeder 15 sind die Segmente 12 in die Betriebsstellung 19 vorgespannt, wobei die Stecklöcher 17 etwas radial nach innen versetzt angeordnet sind, verglichen mit der Radialposition der Durchgangslöcher 16. Der radiale Versatz der Durchgangslöcher 16 und der Stecklöcher 17 ist derart gewählt, dass, wenn ein Bolzen 18 durch die Durchgangslöcher 16 und die Stecklöcher 17 gesteckt wird, die Segmente 1 in die Montagestellung 20 bewegt werden, wobei durch die Zentrierungswirkung des Bolzens 18 die Durchgangslöcher 16 und die Stecklöcher 17 exakt miteinander in Axialrichtung fluchten. In diesem Zustand kann die Labyrinthdichtungsbuchse 5 auf der Dichtungsfläche 4 axial verschoben werden, ohne dass die Dichtungsfläche 4 die Labyrinthdichtungsbuchse 5 berührt. Wird der Bolzen 18 wieder aus den Durchgangslöchern 16 und den Stecklöchern 17 in Axialrichtung herausgezogen, bewegen sich hervorgerufen durch die Vorspannkraft der Schraubenfeder 15 die Segmente 12 in ihre Betriebsstellung 19.

## Patentansprüche

1. Labyrinthdichtungsbuchse (5) für eine Strömungsmaschine (1),
mit einem Labyrinthdichtungsträgerring (6), der an seiner Innenseite einen umlaufenden, radial nach innen sich erstreckenden Flansch (7) aufweist, und einem Labyrinthdichtungsring (11), der über den Umfang aus mindestens einem Segment (12) zusammengesetzt ist,
wobei das Segment (12) des Labyrinthdichtungsrings (11) seitlich an dem Flansch (7) radial verschiebbar anliegt, wodurch das Segment (12) in eine Betriebsstellung und in eine Montagestellung bringbar ist, in der das Segment (12) bezogen auf die Betriebstellung radial nach außen versetzt ist, und an dem Labyrinthdichtungsträgerring (6) mit einem Vorspannmittel (15) radial nach innen vorgespannt abgestützt ist,
**dadurch gekennzeichnet, dass**
der Flansch (7) ein in Axialrichtung sich erstreckendes Durchgangsloch (16) und der Labyrinthdichtungsring (11) ein Steckloch (17) aufweisen, das in der Montagestellung mit dem Durchgangsloch (16) fluchtend und in der Betriebsstellung bezogen auf das Durchgangsloch (16) radial nach innen versetzt angeordnet ist, so dass mittels eines Bolzen (18), der in das Durchgangsloch (16) und das Steckloch (17) gesteckt ist, das Segment (12) in der Montagestellung gehalten ist und, wenn der Bolzen (18) aus dem Steckloch (17) entfernt ist, das Segment (12) von dem Vorspannmittel (15) in die Betriebsstellung gedrückt ist.

2. Labyrinthdichtungsbuchse (5) gemäß Anspruch 1,
wobei der Labyrinthdichtungsträgerring (6) an seiner Innenseite einen umlaufenden, radial nach innen sich erstreckenden, anderen Flansch aufweist, der mit dem einen Flansch (7) eine Nut (8) ausbildet, in die der Labyrinthdichtungsring (11) eingesetzt ist.

3. Labyrinthdichtungsbuchse (5) gemäß Anspruch 2,
wobei die Flansche (7) einander zugewandte Vorsprünge (10) aufweisen, so dass die Nut als eine T-Nut (8) ausgebildet ist, und das Segment (12) einen radial außen liegenden und in Umfangsrichtung laufenden Hammerkopf (14) aufweist, der in die T-Nut (8) formschlüssig eingreift.

4. Labyrinthdichtungsbuchse (5) gemäß Anspruch 3,
wobei von der T-Nut (8) ein Radialspiel des Hammerkopfs (14) derart definiert ist, dass der Hammerkopf (14) an dem Grund der T-Nut (8) radial nach außen abgestützt ist, wenn das Segment (12) in der Montagestellung ist, und an den Vorsprüngen (10) radial nach innen abgestützt ist, wenn das Segment (12) in der Betriebsstellung ist.

5. Labyrinthdichtungsbuchse (5) gemäß einem der Ansprüche 1 bis 4,
wobei von das Vorspannmittel eine Schraubenfeder (15) ist.

6. Labyrinthdichtungsbuchse (5) gemäß Anspruch 5,
wobei in den Segmenten (12) in Umfangsrichtung sich erstreckend ein torusartiger Kanal vorgesehen ist, in den die Schraubenfeder (15) eingesetzt ist und in Umgangsrichtung gespannt ist, so dass mittels der Schraubenfeder (15) das Segment (12) in Radialrichtung nach innen vorgespannt ist.

7. Labyrinthdichtungsbuchse (5) gemäß Anspruch 5,
wobei in den Segmenten (12) jeweils mindestens ein radial nach außen offenes Sackloch vorgesehen ist, in das die Schraubenfeder eingesetzt ist und in Radialrichtung gespannt ist, so dass mittels der Schraubenfeder das Segment (12) in Radialrichtung nach innen vorgespannt ist.

8. Labyrinthdichtungsbuchse (5) gemäß einem der Ansprüche 1 bis 7,
wobei der Labyrinthdichtungsträgerring (6) an seiner Innenseite eine Mehrzahl von den Flanschen (7) aufweist, die axial hintereinander liegend angeordnet sind und an denen jeweils einer der Labyrinthdichtungsringe (11) vorgesehen ist, wobei die Durchgangslöcher (16) der Flansche (7) miteinander fluchtend angeordnet sind und die Stecklöcher (17) in den Labyrinthdichtungsringen (11) als Durchstecklöcher ausgebildet sind, so dass der Bolzen (18) axial durch die hintereinander liegenden Durchgangslöcher (16) der Flansche (7) und die dazugehörigen Durchstecklöcher (17) der Labyrinthdichtungsringe (11) steckbar ist.

9. Labyrinthdichtungsbuchse (5) gemäß einem der Ansprüche 1 bis 8,
wobei das Durchgangsloch (16) und das Steckloch (17) in der Betriebsstellung derart zueinander versetzt angeordnet sind, so dass das Durchgangsloch (16) und das Steckloch (17) sich nicht überlappen,
wobei an dem Steckloch (17) eine Aussparung zum Führen des Bolzen (18) in das Steckloch (17) vorgesehen ist.

10. Strömungsmaschine mit einem Gehäuse mit einer Labyrinthdichtungsbuchse (5) gemäß einem der Ansprüche 1 bis 7 und einer Welle (3) mit einer Dichtungsfläche (4), die zusammen mit der Labyrinthdichtungsbuchse (5) eine Labyrinthdichtung bildet,
wobei die Labyrinthdichtungsbuchse (5) radial nach innen sich erstreckende und umlaufende Dichtspitzen aufweist, die den radial nach außen sich erstreckenden und umlaufende Dichtspitzen der Dichtungsfläche (4) zugewandt angeordnet sind, wobei die Dichtspitzen der Labyrinthdichtungsbuchse (5) mit denen der Dichtungsfläche (4) in der Montagestellung außer Eingriff stehen und in der Betriebsstellung in Eingriff stehen.

11. Strömungsmaschine gemäß Anspruch 10,
wobei das Durchgangsloch (16) des Flanschs (7) mit einem lösbaren Stopfen zum Verschließen des Durchgangslochs (16) versehen ist.

12. Verfahren zur Montage einer Labyrinthdichtung einer Strömungsmaschine gemäß Anspruch 9 oder 10,
mit den Schritten:
Bereitstellen der Labyrinthdichtungsbuchse (5) gemäß einem der Ansprüche 1 bis 9 und der Welle (3) mit der Dichtungsfläche (4);
Einschieben des Bolzens (18) in das Durchgangsloch (16) des Flansches (7) und des Stecklochs (17) des Labyrinthdichtungsrings (11), wodurch der Labyrinthdichtungsring (11) in die Montagestellung gebracht wird;
Überschieben der Labyrinthdichtungsbuchse (6) über die Dichtungsfläche (4), wobei die Dichtspitzen des Labyrinthdichtungsrings (11) und der Dichtungsfläche (4) außer Eingriff stehen;
Herausziehen des Bolzens (18) aus dem Durchgangsloch (16) des Flansches (7) und dem Steckloch (16) des Labyrinthdichtungsrings (4), wodurch der Labyrinthdichtungsring (11) von dem Vorspannmittel (15) in die Betriebsstellung gebracht wird, so dass der Labyrinthdichtungsring (11) und die Dichtungsfläche (4) die Labyrinthdichtung bilden.

## Claims

1. Labyrinth seal bush (5) for a turbomachine (1), with a labyrinth seal carrier ring (6) which has on its inner side a peripheral, radially inwardly extending flange (7), and with a labyrinth seal ring (11) which is composed over the circumference of at least one segment (12), wherein the segment (12) of the labyrinth seal ring (11) bears laterally on the flange (7) in a radially displaceable manner, with the result that the segment (12) can be brought into an operating position and into an assembly position in which the segment (12) is radially outwardly offset relative to the operating position, and is supported on the labyrinth seal carrier ring (6) so as to be radially inwardly pretensioned with a pretensioning means (15), **characterized in that** the flange (7) has a passage hole (16) extending in the axial direction and the labyrinth seal ring (11) has a plug hole (17) which is arranged so as to be aligned with the passage hole (16) in the assembly position and to be radially inwardly offset relative to the passage hole (16) in the operating position, such that, by means of a bolt (18) which is plugged into the passage hole (16) and the plug hole (17), the segment (12) is held in the assembly position, and, when the bolt (18) is removed from the plug hole (17), the segment (12) is pressed by the pretensioning means (15) into the operating position.

2. Labyrinth seal bush (5) according to Claim 1, wherein the labyrinth seal carrier ring (6) has on its inner side a peripheral, radially inwardly extending, other flange which with the one flange (7) forms a groove (8) into which the labyrinth seal ring (11) is inserted.

3. Labyrinth seal bush (5) according to Claim 2, wherein the flanges (7) have mutually facing projections (10) such that the groove is designed as a T-groove (8), and the segment (12) has a radially outwardly situated hammer head (14) which extends in the circumferential direction and which positively engages in the T-groove (8).

4. Labyrinth seal bush (5) according to Claim 3, wherein a radial clearance of the hammer head (14) is defined by the T-groove (8) in such a way that the hammer head (14) is radially outwardly supported on the base of the T-groove (8) when the segment (12) is in the assembly position, and is radially inwardly supported on the projections (10) when the segment (12) is in the operating position.

5. Labyrinth seal bush (5) according to one of Claims 1 to 4, wherein the pretensioning means is a helical spring (15).

6. Labyrinth seal bush (5) according to Claim 5, wherein a torus-like channel is provided in the segments (12) so as to extend in the circumferential direction, into which channel the helical spring (15) is inserted and is tensioned in the circumferential direction such that the segment (12) is pretensioned inwardly in the radial direction by means of the helical spring (15).

7. Labyrinth seal bush (5) according to Claim 5, wherein in each case at least one radially outwardly open blind hole is provided in the segments (12), into which blind hole the helical spring is inserted and in tensioned in the radial direction such that the segment (12) is pretensioned inwardly in the radial direction by means of the helical spring.

8. Labyrinth seal bush (5) according to one of Claims 1 to 7, wherein the labyrinth seal carrier ring (6) has on its inner side a plurality of flanges (7) which are arranged so as to lie axially behind one another and on which in each case one of the labyrinth seal rings (11) is provided, wherein the passage holes (16) of the flanges (7) are arranged in alignment with one another and the plug holes (17) in the labyrinth seal rings (11) are designed as plug-through holes such that the bolt (18) can be plugged axially through the passage holes (16), situated behind one another, of the flanges (7) and through the associated plug-through holes (17) of the labyrinth seal rings (11).

9. Labyrinth seal bush (5) according to one of Claims 1 to 8, wherein the passage hole (16) and the plug hole (17) are arranged in an offset manner with respect to one another in the operating position in such a way that the passage hole (16) and the plug hole (17) do not overlap one another, wherein a cutout for guiding the bolt (18) into the plug hole (17) is provided on the plug hole (17).

10. Turbomachine having a housing with a labyrinth seal bush (5) according to one of Claims 1 to 7 and a shaft (3) with a sealing surface (4) which, together with the labyrinth seal bush (5), forms a labyrinth seal, wherein the labyrinth seal bush (5) has radially inwardly extending and peripheral sealing tips which are arranged so as to face the radially outwardly extending and peripheral sealing tips of the sealing surface (4), wherein the sealing tips of the labyrinth seal bush (5) are out of engagement with those of the sealing surface (4) in the assembly position and in engagement therewith in the operating position.

11. Turbomachine according to Claim 10, wherein the passage hole (16) of the flange (7) is provided with a releasable plug for closing the passage hole (16).

12. Method for assembling a labyrinth seal of a turbomachine according to Claim 9 or 10, comprising the following steps:
providing the labyrinth seal bush (5) according to one of Claims 1 to 9 and the shaft (3) having the sealing surface (4);
inserting the bolt (18) into the passage hole (16) of the flange (7) and the plug hole (17) of the labyrinth seal ring (11), with the result that the labyrinth seal ring (11) is brought into the assembly position;
sliding the labyrinth seal bush (6) over the sealing surface (4), wherein the sealing tips of the labyrinth seal ring (11) and of the sealing surface (4) are out of engagement;
withdrawing the bolt (18) from the passage hole (16) of the flange (7) and the plug hole (16) of the labyrinth seal ring (4), with the result that the labyrinth seal ring (11) is brought by the pretensioning means (15) into the operating position such that the labyrinth seal ring (11) and the sealing surface (4) form the labyrinth seal.

## Revendications

1. Douille ( 5 ) de joint à labyrinthe pour une turbomachine ( 1 ),
comprenant un anneau ( 6 ) de support de joint à labyrinthe, qui a sur sa face intérieure une bride ( 7 ) faisant le tour et s'étendant radialement vers l'intérieur et un anneau ( 11 ) de joint à labyrinthe, qui se compose sur le pourtour d'au moins un segment ( 12 ),
dans laquelle le segment ( 12 ) de l'anneau ( 11 ) de joint à labyrinthe s'applique avec possibilité de coulisser radialement latéralement à la bride ( 7 ), de manière à pouvoir mettre le segment ( 12 ) dans une position de fonctionnement et dans une position de montage, dans laquelle le segment ( 12 ) est décalé radialement vers l'extérieur par rapport à la position de fonctionnement et est appuyé sur l'anneau ( 6 ) de support de joint à labyrinthe avec précontrainte radialement vers l'intérieur par un moyen ( 15 ) de précontrainte,
**caractérisée en ce que**
la bride ( 7 ) a un trou ( 16 ) traversant s'étendant dans la direction axiale et l'anneau ( 11 ) de joint à labyrinthe a un trou ( 17 ) d'enfichage, qui est disposé dans la position de montage en alignement avec le trou ( 16 ) traversant et dans la position de fonctionnement en étant décalé radialement vers l'intérieur par rapport au trou ( 16 ) traversant, de sorte qu'au moyen d'un axe ( 18 ), qui est enfilé dans le trou ( 16 ) traversant et dans le trou ( 17 ) d'enfichage, le segment ( 12 ) est maintenu dans la position de montage et, lorsque l'axe ( 18 ) est retiré du trou ( 17 ) d'enfichage, le segment ( 12 ) est repoussé dans la position de fonctionnement par le moyen ( 15 ) de précontrainte.

2. Douille ( 5 ) de joint à labyrinthe suivant la revendication 1,
dans laquelle l'anneau ( 6 ) de support du joint à labyrinthe a sur sa face intérieure une autre bride, qui fait le tour, qui s'étend radialement vers l'intérieur et qui forme avec la une bride ( 7 ) une rainure ( 8 ), dans laquelle est inséré l'anneau ( 11 ) du joint à labyrinthe.

3. Douille ( 5 ) de joint à labyrinthe suivant la revendication 2,
dans laquelle les brides ( 7 ) ont des saillies tournées l'une vers l'autre, de sorte que la rainure est constituée sous la forme d'une rainure ( 8 ) en T, et le segment ( 12 ) a une tête ( 14 ) de marteau se trouvant à l'extérieur radialement et s'étendant dans la direction périphérique, qui pénètre à complémentarité de forme dans la rainure ( 8 ) en T.

4. Douille ( 5 ) de joint à labyrinthe suivant la revendication 3,
dans laquelle il est défini par la rainure ( 8 ) en T un jeu radial de la tête ( 14 ) de marteau, de manière à ce que la tête ( 14 ) de marteau s'appuie radialement vers l'extérieur sur le fond de la rainure ( 8 ) en T, lorsque le segment ( 12 ) est dans la position de montage, et s'appuie radialement vers l'intérieur sur les saillies ( 10 ), lorsque le segment ( 12 ) est dans la position de fonctionnement.

5. Douille ( 5 ) de joint à labyrinthe suivant l'une des revendications 1 à 4,
dans laquelle un ressort ( 15 ) hélicoïdal fait partie du moyen de précontrainte.

6. Douille ( 5 ) de joint à labyrinthe suivant la revendication 5,
dans laquelle il est prévu dans les segments ( 12 ) un canal de type en tore, qui s'étend dans la direction périphérique, dans lequel le ressort ( 15 ) hélicoïdal est inséré et qui est bloqué dans la direction du pourtour de manière à ce qu'au moyen du ressort ( 15 ) hélicoïdal le segment ( 12 ) soit précontraint vers l'intérieur dans la direction radiale.

7. Douille ( 5 ) de joint à labyrinthe suivant la revendication 5,
dans laquelle il est prévu dans les segments ( 12 ) respectivement au moins un trou borgne ouvert radialement vers l'extérieur, dans lequel le ressort hélicoïdal est inséré et est bloqué dans la direction radial, de sorte qu'au moyen du ressort hélicoïdal le segment ( 12 ) est précontraint vers l'intérieur dans la direction radiale.

8. Douille ( 5 ) de joint à labyrinthe suivant l'une des revendications 1 à 7,
dans laquelle l'anneau ( 6 ) de support de joint à labyrinthe a sur sa face intérieure une pluralité de brides ( 7 ), qui sont disposées les unes derrière les autres axialement et sur lesquelles est prévu respectivement l'un des anneaux ( 11 ) de joint à labyrinthe, les trous ( 16 ) traversants des flancs ( 7 ) étant alignés entre eux et les trous ( 7 ) d'enfichage dans les anneaux ( 11 ) du joint à labyrinthe étant sous la forme de trous d'enfichage, de sorte que le goujon ( 8 ) peut être enfilé axialement dans les trous ( 16 ) traversants disposés les uns derrière les autres des brides ( 7 ) et dans les trous ( 17 ) d'enfichage associés des anneaux ( 11 ) de joint à labyrinthe.

9. Douille ( 5 ) de joint à labyrinthe suivant l'une des revendications 1 à 8,
dans laquelle le trou ( 16 ) de passage et le trou ( 17 ) d'enfichage sont décalés l'un par rapport à l'autre dans la position de fonctionnement, de manière à ce que le trou ( 16 ) traversant et le trou ( 17 ) d'enfichage ne se chevauchent pas,
dans laquelle il est prévu sur le trou ( 17 ) d'enfichage un évidement pour le guidage du goujon ( 18 ) dans le trou ( 17 ) d'enfichage.

10. Turbomachine ayant un carter ayant une douille ( 5 ) de joint à labyrinthe suivant l'une des revendications 1 à 7 et un arbre ( 3 ) ayant une surface ( 4 ) d'étanchéité qui, ensemble avec la douille ( 5 ) de joint à labyrinthe, forme un joint à labyrinthe,
dans laquelle la douille ( 5 ) de joint à labyrinthe a une pointe d'étanchéité qui s'étend radialement vers l'intérieur et qui fait le tour, les pointes d'étanchéité qui s'étendent radialement vers l'extérieur et qui font le tour sont tournées vers la surface ( 4 ) d'étanchéité, les pointes d'étanchéité de la douille ( 5 ) de joint à labyrinthe étant dans la position de montage hors de prise avec celles de la surface ( 4 ) d'étanchéité et en prise dans la position de fonctionnement.

11. Turbomachine suivant la revendication 10,
dans laquelle le trou ( 16 ) traversant de la bride ( 7 ) est pourvu d'un bouchon amovible pour la fermeture du trou ( 16 ) traversant.

12. Procédé de montage d'un joint à labyrinthe d'une turbomachine suivant la revendication 9 ou 10,
comprenant les stades dans lesquels :
on se procure la douille ( 5 ) de joint à labyrinthe suivant l'une des revendications 1 à 9 et l'arbre ( 3 ) ayant la surface ( 4 ) d'étanchéité ;
on insère le goujon ( 18 ) dans le trou ( 16 ) traversant de la bride ( 7 ) et dans le trou ( 17 ) d'enfichage de l'anneau ( 11 ) de joint à labyrinthe en mettant ainsi l'anneau ( 11 ) de joint à labyrinthe dans la position de montage ;
on fait passer la douille ( 6 ) de joint à labyrinthe sur la surface ( 4 ) d'étanchéité, de sorte que les pointes d'étanchéité de l'anneau ( 11 ) de joint à labyrinthe et la surface ( 4 ) d'étanchéité soient hors de prise ;
on retire le goujon ( 18 ) du trou ( 16 ) traversant de la bride ( 7 ) et du trou ( 16 ) d'enfichage de l'anneau ( 4 ) de joint à labyrinthe en mettant ainsi l'anneau ( 11 ) de joint à labyrinthe en la position de fonctionnement par le moyen ( 15 ) de précontrainte, de manière à ce que l'anneau ( 11 ) de joint à labyrinthe et la surface ( 4 ) d'étanchéité forment le joint à labyrinthe.
